# EUROPÄISCHE PATENTSCHRIFT

(11) **EP 0 695 474 B1**
(45) Veröffentlichungstag und Bekanntmachung des Hinweises auf die Patenterteilung: **25.06.1997**
(21) Anmeldenummer: 94913503.2
(22) Anmeldetag: 19.04.1994
(51) Int. Cl.: H02B 13/02, H02B 13/00, H02B 11/02

(54) **ANTRIEBSVORRICHTUNG FÜR EINEN TRENN- ODER ERDUNGSSCHALTER IN EINEM SCHALTFELD**
DRIVING DEVICE FOR A DISCONNECTING AND EARTHING SWITCH IN A SWITCHGEAR PANEL
DISPOSITIF D'ENTRAINEMENT POUR SECTIONNEUR OU INTERRUPTEUR DE MISE A LA TERRE DANS UN TABLEAU ELECTRIQUE

(30) Priorität: 21.04.1993 DE 4313650
(43) Veröffentlichungstag der Anmeldung: 07.02.1996
(73) Patentinhaber: SIEMENS AKTIENGESELLSCHAFT, 80333 München (DE)
(72) Erfinder: GRONEMANN, Karl-Heinz, D-63128 Dietzenbach (DE); MÜLLER, Rolf, D-63785 Obernburg (DE)
(86) Internationale Anmeldenummer: DE9400517
(87) Internationale Veröffentlichungsnummer: WO9424746

(56) Entgegenhaltungen:
- DE-A- 1 590 206
- US-A- 2 792 462
- US-A- 2 982 827
- US-A- 3 219 771
- US-A- 4 317 160
- PATENT ABSTRACTS OF JAPAN vol. 15, no. 147 (E-1055) 12. April 1991 & JP-A-03 022 805

## Beschreibung

Die Erfindung betrifft eine Antriebsvorrichtung für einen Trenn- oder Erdungsschalter in einem für ein fahrbares Schaltgerät eingerichteten Schaltfeld mit einer an der Bedienungsfront des Schaltfeldes zugänglichen Einstecköffnung für eine Kurbel und mit einer die Kurbel mit inneren Antriebsteilen des Trenn- oder Erdungsschalters verbindenden Kupplungsbaugruppe, mit einem Gehäuse zur Lagerung einer zu den inneren Antriebsteilen gehörenden und durch die Kurbel betätigbaren Welle.

Schaltfelder mit der genannten Ausstattung sind z.B. in der DE-Firmendruckschrift Siemens: "Leistungsschalter-Einschubanlagen bis 24 kV, Typ 8BJ20", Katalog HA 25.11, 1992, bekanntgeworden. Um zu verhindern, daß gefahrbringende Schalthandlungen vorgenommen werden können, ist es in diesem Zusammenhang bekannt, zwischen der Einstecköffnung für die Kurbel und die Kupplungsbaugruppe einen Sperrschieber anzuordnen, der die Einstecköffnung zur Betätigung eines Erdungsschalters insbesondere nur dann freigibt, wenn sich das fahrbare Schaltgerät, z.B. ein Leistungsschalter, in seiner gesicherten Trennstellung befindet. Sind noch weitere Verriegelungsbedingungen einzuhalten, so sind weitere Sperrschieber erforderlich. Da eine Vielzahl unterschiedlich ausgerüsteter Schaltfelder benötigt wird, unterscheiden sich die der Kupplungsbaugruppe vorzuschaltenden Sicherheitseinrichtungen und die Einbaulage der Kupplungsbaugruppe innerhalb eines Schaltfeldes.

Im Zusammenhang mit der Verhinderung von gefahrbringenden Schalthandlungen ist es aus der US-Patentschrift 3 219 771 bekannt, durch Eingriff eines Sperrhebels in die Antriebswelle den Drehantrieb mit der Kurbel gänzlich zu unterbinden. Die mechanische Ausgestaltung dieser Sperrung ist relativ aufwendig und insbesondere bei zusätzlich vorzuschaltenden Sicherungsbedingungen nur durch komplizierte Hebelsteuerungen mit diversen Umlenkungen erreichbar.

Der Erfindung liegt hiervon ausgehend die Aufgabe zugrunde, die Sicherheitseinrichtung gegen eine fehlerhafte Betätigung eines Erdungs- oder Trennschalters zu vereinfachen.

Diese Aufgabe wird gemäß der Erfindung dadurch gelöst, daß
- im Endteil der Welle ein Füllkörper axial verschiebbar geführt ist,
- in einer Gehäusewandung des Gehäuses wenigstens eine Führungsöffnung für einen Sperrkörper angeordnet ist,
- der Sperrkörper durch ein Riegelorgan in den Weg des Füllkörpers bzw. durch den Füllkörper in Eingriff mit dem Riegelorgan bewegbar ist, und dadurch der Endteil der Welle für die Kurbel zugänglich oder unzugänglich ist.

Hierdurch entfällt nicht nur die Verwendung von Sperrschiebern, sondern es wird zugleich die Möglichkeit geschaffen, bei unveränderter Einbaulage der Kupplungsbaugruppe mehrere Verriegelungsbedingungen wahlweise zu erfüllen. Dies ist im Bedarfsfall dadurch möglich, daß am Umfang des Gehäuses wenigstens ein weiterer Sperrkörper angeordnet ist.

Um bei einfacher Form des axial in der Welle verschiebbaren Füllkörpers eine zuverlässige Sperrung zu erreichen, empfiehlt es sich, in der Welle bzw. ihrem Endteil eine Ausnehmung zur teilweisen Aufnahme des Sperrkörpers anzuordnen.

Als Sperrkörper sind für die Zwecke der Erfindung besonders standardmäßige Stahlkugeln geeignet, wenngleich auch spezielle Stifte mit einem zylindrischen oder sonstigen Profil verwendbar sind.

Die Erfindung wird im folgenden anhand des in den Figuren dargestellten Ausführungsbeispiels näher erläutert.

Die Figur 1 zeigt ein Mittelspannungs-Schaltfeld mit einem fahrbar angeordneten Leistungsschalter in einer Frontansicht.

In der Figur 2 ist das Schaltfeld gemäß der Figur 1 in einer Seitenansicht mit abgenommener Abdeckung gezeigt.

Die Figur 3 zeigt eine Kupplungsbaugruppe teilweise in einem Längsschnitt.

In der Figur 4 ist die in der Figur 3 gezeigte Kupplungsbaugruppe im Querschnitt dargestellt.

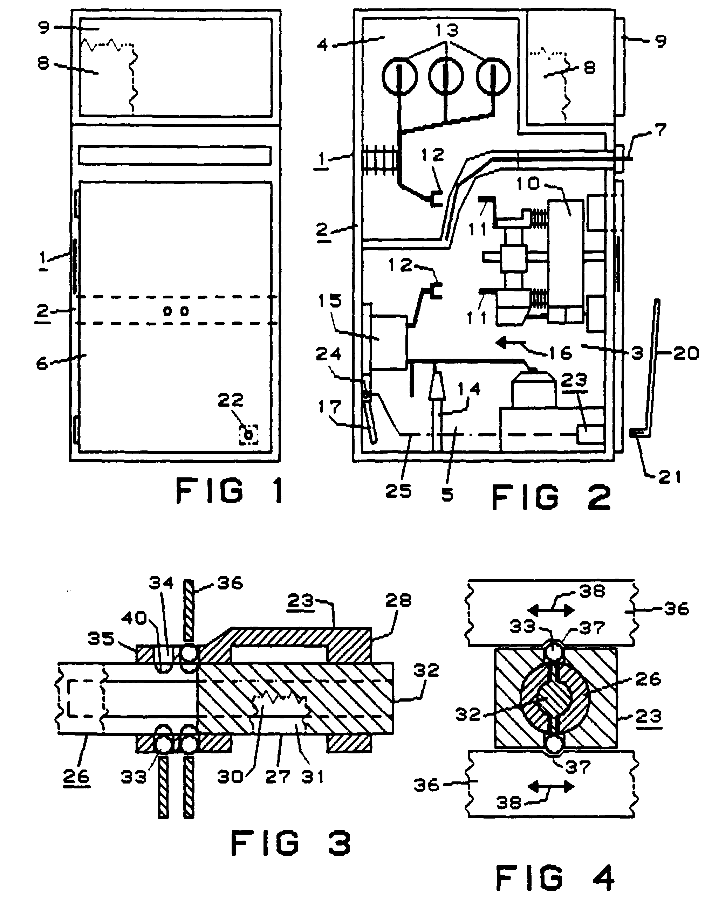

Anhand der Figuren 1 und 2 wird zunächst der allgemeine Aufbau eines Mittelspannungs-Schaltfeldes 1 erklärt. Das Schaltfeld 1 besitzt ein Gehäuse 2 mit einem Schalterraum 3, einem Sammelschienenraum 4 und einem Kabelanschlußraum 5. Der Schalterraum 3 ist durch eine Tür 6 verschließbar. Die genannten Räume sind als Unterteilung eines Gesamtraumes zu verstehen und sind nicht oder nur teilweise durch Zwischen- oder Schottwände voneinander getrennt. In der Figur 2 ist jedoch als vorübergehende Abtrennung des Schalterraumes 3 gegenüber dem Sammelschienenraum 4 eine Arbeitsschutzplatte 7 gezeigt. Diese erlaubt das gefahrlose Arbeiten im Kabelanschlußraum 5, wenn sich ein in der Figur 2 gezeigter Leistungsschalter 10 in der dargestellten Trennstellung befindet und daher die am Leistungsschalter 10 befindlichen bewegbaren Trennkontakte 11 ortsfesten Trennkontakten 12 mit einem Abstand gegenüberstehen. Die oberen ortsfesten Trennkontakte 12 stehen mit im Sammelschienenraum 4 untergebrachten Sammelschienen 13 in Verbindung.

Abgangsseitige Kabel 14 sind über Stromwandler 15 und die unteren ortsfeste Trennkontakte 12 mit der Abgangsseite des Leistungsschalters 10 dadurch verbindbar, daß der Leistungsschalter 10 aus der dargestellten Trennstellung in Richtung eines Pfeiles 16 in seine Betriebsstellung verfahren wird. Zuvor ist die Arbeitsschutzplatte 7 zu entfernen.

In den Figuren 1 und 2 ist noch ein oberhalb des Schalterraumes 3 befindlicher Niederspannungsraum 8 mit einer gesonderten Tür 9 gezeigt. Der Niederspannungsraum 8 dient zur Aufnahme von Steuer-, Anzeige und Meldegeräten für den Betrieb des Schaltfeldes 1.

Nur in der Trennstellung des Leistungsschalters 10 gemäß der Figur 2 darf ein Erdungsschalter 17 betätigt werden, der unterhalb der Stromwandler 15 angeordnet ist. Zur Betätigung des Erdungsschalters 17 dient eine Kurbel 20, deren Kopfstück 21 in eine in der Figur 1 gezeigte Einstecköffnung 22 einrührbar ist, die in der den Schalterraum 3 verschließenden Tür 6 des Gehäuses 2 angebracht ist. Hinter der Tür 6 befindet sich eine Kupplungsbaugruppe 23, deren Aufgabe darin besteht, eine Drehung der Kurbel 20 auf eine Schalterwelle 24 des Erdungsschalters 17 zu übertragen. Hierzu vorgesehene Antriebsteile 25 sind in der Figur 2 nur strichpunktiert angedeutet.

Der Aufbau der Kupplungsbaugruppe 23 wird nachfolgend anhand der Figuren 3 und 4 erläutert. Eine zu den Antriebsteilen 25 gehörende Welle 26 ist mit einem Endteil 27 in einem Gehäuse 28 drehbar gelagert. Das Endteil 27 ragt nach rechts aus dem Gehäuse 28 heraus und ist dort durch die Einstecköffnung 22 zugänglich. Der Endteil 27 besitzt zum Eingreifen des Kopfstückes 21 der Kurbel 20 eine Bohrung 30 und einen Schlitz 31. In den Endteil 27 ist ein dem Profil des Kopfstückes 21 entsprechender Füllkörper 32 eingesetzt, der daher in dem Endteil 27 axial verschiebbar ist. Da der Füllkörper 32 bis zum vorderen Ende des Endteiles 27 der Welle 26 reicht, kann das Kopfstück 21 der Kurbel 20 nur eingesteckt werden, wenn sich der Füllkörper 32 aus der dargestellten Lage nach links verschieben läßt.

Eine Verschiebung des Füllkörpers 32 ist nur möglich, wenn als Kugeln ausgebildete Sperrkörper 33 sich nicht im Weg des Füllkörpers 32 befinden oder durch den Füllkörper 32 radial nach außen verdrängt werden können. Die Sperrkörper 33 sind in Ausnehmungen 34 einer Gehäusewandung 35 des Gehäuses 30 der Kupplungsbaugruppe 23 geführt und sind durch je ein zugeordnetes Riegelorgan 36 zu beeinflussen. In den Figuren 3 und 4 sind schieberartige Riegelorgane 36 gezeigt, die eine Ausnehmung 37 besitzen. Diese ist den Sperrkörpern 33 angepaßt, so daß bei einer Verschiebung des Riegelorgans 36 in der Richtung des Doppelpfeiles 38 auf den betreffenden Sperrkörper 33 eine gegen den Endteil 27 der Welle 26 gerichtete Kraft ausgeübt wird. Der Sperrkörper 33 gelangt hierdurch in eine Ausnehmung 40 im Endteil 27 und befindet sich somit im Weg des Füllkörpers 32.

Durch eine geeignete Steuerung der Riegelorgane 36 in Abhängigkeit von jeweils vorliegenden Verriegelungsbedingungen ist als zu erreichen, daß die Kurbel 20 in Eingriff mit der Welle 26 gebracht werden kann oder nicht. Ist der Eingriff möglich, so wird andererseits das betreffende Riegelorgan 36 blockiert und damit eine Änderung des bestehenden Zustandes verhindert. Es besteht daher eine wechselseitige Abhängigkeit zwischen der Stellung des Füllkörpers 32 und den Riegelorganen 36.

Als Riegelorgane 36 sind vorstehend schieberartige Teile beschrieben worden. Offensichtlich kann aber die Beaufschlagung der Sperrkörper 33 mit einer Kraft durch beliebige andere Mittel erfolgen, z.B. durch Gestänge, Bodenzüge oder Elektromagnete. Da der gesamte Umfang der Welle 26 bzw. ihres Endteiles 27 zur Anbringung von Sperrkörpern 33 zur Verfügung steht, kann eine beträchtliche Anzahl von Verriegelungsbedingungen erfüllt werden, ohne daß hierdurch die prinzipielle Gestaltung der Kupplungsbaugruppe 23 verändert oder ihre für den Einbau in das Schaltfeld 1 wesentlichen Abmessungen vergrößert werden. Die Kupplungsbaugruppe 23 ist daher in Schaltanlagen universell einsetzbar.

Die Erfindung wurde vorstehend im Zusammenhang mit einem ungeschotteten Schaltfeld erläutert. Offensichtlich kann die beschriebene Kupplungsbaugruppe 23 aber auch in geschotteten Schaltfeldern mit Vorteil eingesetzt werden, um die dort vorgesehenen Trenn- oder Erdungsschalter angemessen gegen Fehlbedienung zu schützen.

## Patentansprüche

1. Antriebsvorrichtung für einen Trenn- oder Erdungsschalter (17) in einem für ein fahrbares Schaltgerät (10) eingerichteten Schaltfeld (1) mit einer an der Bedienungsfront des Schaltfeldes (1) zugänglichen Einstecköffnung (22) für eine Kurbel (20) und mit einer die Kurbel (20) mit inneren Antriebsteilen (25) des Trenn- oder Erdungsschalters (17) verbindenden Kupplungsbaugruppe (23) mit einem Gehäuse (28) zur Lagerung einer zu den inneren Antriebsteilen (25) gehörenden und durch die Kurbel (20) betätigbaren Welle (26),
**dadurch gekennzeichnet,** daß
- im Endteil (27) der Welle (26) ein Füllkörper (32) axial verschiebbar geführt ist,
- in einer Gehäusewandung (35) des Gehäuses (28) wenigstens eine Führungsöffnung(34) für einen Sperrkörper (33) angeordnet ist,
- der Sperrkörper (33) durch ein Riegelorgan (36) in den Weg des Füllkörpers (32) bzw. durch den Füllkörper (32) in Eingriff mit dem Riegelorgan (36) bewegbar ist und dadurch der Endteil (27) der Welle (26) für die Kurbel (20) zugänglich oder unzugänglich ist.

2. Antriebsvorrichtung für einen Trenn- oder Erdungsschalter nach Anspruch 1,
**dadurch gekennzeichnet,** daß
am Umfang des Gehäuses (28) wenigstens ein weiterer Sperrkörper (33) angeordnet ist.

3. Antriebsvorrichtung für einen Trenn- oder Erdungsschalter nach Anspruch 1 oder 2,
**dadurch gekennzeichnet,** daß
in der Welle (26) bzw. ihrem Endteil (27) eine Ausnehmung (40) zur teilweisen Aufnahme des Sperrkörpers (33) angeordnet ist.

4. Antriebsvorrichtung für einen Trenn- oder Erdungsschalter nach einem der vorangehenden Ansprüche,
**dadurch gekennzeichnet,** daß
als Sperrkörper (33) eine Kugel dient.

## Claims

1. Driving device for a disconnecting or earthing switch (17) in a switchgear panel (1), which is set up for a movable switching device (10), having an insertion opening (22) for a crank (20), which opening is accessible from the operating front of the switchgear panel (1), and having a coupling assembly (23) which connects the crank (20) with inner drive portions (25) of the disconnecting or earthing switch (17), having a housing (28) for the purpose of providing mounting support for a shaft (26) which pertains to the inner drive portions (25) and can be actuated by the crank (20), characterised in that
- a filling body (32) is guided in an axially displaceable manner in the end portion (27) of the shaft (26),
- at least one guide opening (34) for a blocking body (33) is arranged in a housing wall (35) of the housing (28),
- the blocking body (33) can be moved by means of a locking element (36) into the path of the filling body (32) or by means of the filling body (32) into engagement with the locking element (36) and as a result the end portion (27) of the shaft (26) is accessible or inaccessible to the crank (20).

2. Driving device for a disconnecting or earthing switch according to claim 1, characterised in that at least one further blocking body (33) is arranged on the periphery of the housing (28).

3. Driving device for a disconnecting or earthing switch according to claim 1 or 2, characterised in that a recess (40) is arranged in the shaft (26) or its end portion (27) for the purpose of partly accommodating the blocking body (33).

4. Driving device for a disconnecting or earthing switch according to one of the preceding claims, characterised in that a sphere is used as a blocking body (33).

## Revendications

1. Dispositif d'entraînement destiné à un sectionneur ou interrupteur de mise à la terre (17) dans un tableau de distribution (1) agencé pour un appareil de commutation mobile (10), comportant une ouverture d'enfichage (22) pour une manivelle (20) qui est accessible sur le panneau de commande du tableau de distribution (1), et un module de couplage (23) reliant la manivelle (20) à des éléments d'entraînement intérieurs (25) du sectionneur ou interrupteur de mise à la terre (17), qui comporte un boîtier (28) destiné au logement d'un arbre (26) faisant partie des éléments d'entraînement intérieurs (25) et pouvant être actionné par la manivelle (20),
caractérisé par le fait que
- un corps de remplissage (32) est monté coulissant axialement dans la partie d'extrémité (27) de l'arbre (26) ;
- au moins une ouverture de guidage (34), qui est destinée à un corps de blocage (33), est pratiquée dans une paroi (35) du boîtier (28) ;
- le corps de blocage (33) peut être déplacé par un élément de verrouillage (36) dans le trajet du corps de remplissage (32) ou par le corps de remplissage (32) en prise avec l'élément de verrouillage (36), et ainsi, la partie d'extrémité (27) de l'arbre (26) est accessible ou non accessible pour la manivelle (20).

2. Dispositif d'entraînement destiné à un sectionneur ou interrupteur de mise à la terre selon la revendication 1,
caractérisé par le fait qu'au moins un autre corps de blocage (33) est disposé sur la circonférence du boîtier (28).

3. Dispositif d'entraînement destiné à un sectionneur ou interrupteur de mise à la terre selon la revendication 1 ou 2,
caractérisé par le fait qu'un évidement (40) destiné à recevoir partiellement le corps de blocage (33) est pratiqué dans l'arbre (26) ou dans la partie d'extrémité (27) de ce dernier.

4. Dispositif d'entraînement destiné à un sectionneur ou interrupteur de mise à la terre selon l'une quelconque des revendications précédentes,
caractérisé par le fait qu'une bille sert de corps de blocage (33).
